# EUROPEAN PATENT SPECIFICATION

(11) **EP 4 055 921 B1**
(45) Date of publication and mention of the grant of the patent: **19.04.2023**
(21) Application number: 20790397.2
(22) Date of filing: 06.10.2020
(51) Int. Cl.: H04W 64/00, G01S 5/02, H04W 48/12, G01S 7/06

(54) **USER EQUIPMENT, CORE NETWORK NODE, RADIO NETWORK NODE AND METHODS IN A WIRELESS COMMUNICATIONS NETWORK**
BENUTZERGERÄT, KERNNETZKNOTEN, FUNKNETZKNOTEN UND VERFAHREN IN EINEM DRAHTLOSEN KOMMUNIKATIONSNETZ
ÉQUIPEMENT D'UTILISATEUR, NOEUD DE RÉSEAU CENTRAL, NOEUD DE RÉSEAU RADIO ET PROCÉDÉS DANS UN RÉSEAU DE COMMUNICATIONS SANS FIL

(30) Priority: 07.11.2019 US 201962931819 P
(43) Date of publication of application: 14.09.2022
(73) Proprietor: TELEFONAKTIEBOLAGET LM ERICSSON (PUBL), 164 83 Stockholm (SE)
(72) Inventor: SHREEVASTAV, Ritesh, 194 47 Upplands Väsby (SE); GUNNARSSON, Fredrik, 587 50 LINKÖPING (SE); MODARRES RAZAVI, Sara, 58330 Linköping (SE); SHRESTHA, Deep, 586 44 Linköping (SE)
(74) Representative: Ericsson
(86) International application number: PCT/SE2020/050952
(87) International publication number: WO 2021/091447

(56) References cited:
- US-A1- 2012 184 302
- US-A1- 2018 324 740
- "3rd Generation Partnership Project; Technical Specification Group Radio Access Network; NG Radio Access Network (NG-RAN); Stage 2 functional specification of User Equipment (UE) positioning in NG-RAN (Release 15)", 3GPP STANDARD; TECHNICAL SPECIFICATION; 3GPP TS 38.305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.4.0, 28 June 2019 (2019-06-28), pages 1-72, XP051754451, [retrieved on 2019-06-28]
- ERICSSON: "Procedure based LPP", 3GPP DRAFT; R2-096739, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050391214, [retrieved on 2009-11-03]

## Description

### TECHNICAL FIELD

Embodiments herein relate to a User Equipment (UE), a core network node, a radio network node and methods therein. In some aspects, they relate to handling positioning of the UE in a wireless communications network.

### BACKGROUND

In a typical wireless communication network, wireless devices, also known as wireless communication devices, mobile stations, stations (STA) and/or User Equipment (UE), communicate via a Local Area Network such as a Wi-Fi network or a Radio Access Network (RAN) to one or more core networks (CN). The RAN covers a geographical area which is divided into service areas or cell areas, which may also be referred to as a beam or a beam group, with each service area or cell area being served by a radio network node such as a radio network node e.g., a Wi-Fi access point or a radio base station (RBS), which in some networks may also be denoted, for example, a NodeB, eNodeB (eNB), new generation eNB (ng-eNB) or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques may significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

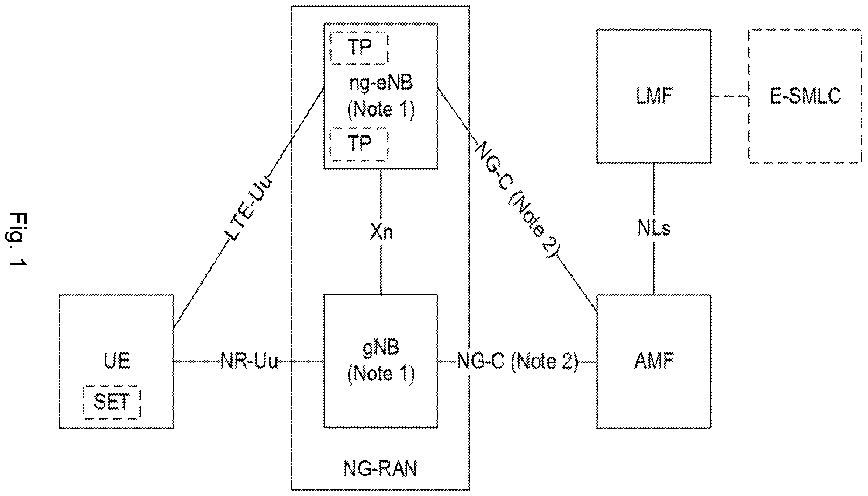

Positioning has been a topic in LTE standardization since 3GPP Release 9. The primary objective is to fulfil regulatory requirements for emergency call positioning. Positioning in NR is proposed to be supported by an architecture as shown in Figure 1. Figure 1 illustrates an example of NG-RAN Release-15 Location Services (LCS) Protocols. Location Management Function (LMF) is the location node in NR. There are also interactions between a location node and the gNodeB via the NR Positioning Protocol A (NRPPa) protocol. The interactions between the gNodeB and a device such as a UE, is supported via the Radio Resource Control (RRC) protocol.

In Figure 1,
**E-SMLC** means Evolved Serving Mobile Location Centre,
**AMF** means Mobility Management Function;
**NLs** is the interface between the LMF and the AMF,
**LTE-Uu** is the interface between the UE and the ng-eNB in LTE,
**NR-Uu** is the interface between the UE and the gNB in NR,
**Xn** is the interface between the ng-eNB and gNB.
**TP** means Transmission Points.

**Note 1:** The gNB and ng-eNB may not always both be present.

**Note 2:** When both the gNB and ng-eNB are present, the NG Control plane (NG-C) interface is only present for one of them.

In the legacy LTE standards, the following techniques are supported:
- Enhanced Cell Identity (ID). Essentially cell ID information to associate the device to the serving area of a serving cell, and then additional information to determine a finer granularity position.
- Assisted Global Navigation Satellite System (GNSS). GNSS information retrieved by the device, supported by assistance information provided to the device from an Evolved Serving Mobile Location Centre (E-SMLC);
- Observed Time Difference of Arrival (OTDOA). The device estimates the time difference of reference signals from different base stations and sends to the E-SMLC for multilateration.
- Uplink Time Difference of Arrival (UTDOA). The device is requested to transmit a specific waveform that is detected by multiple location measurement units (e.g. an eNB) at known positions. These measurements are forwarded to E-SMLC for multilateration
- Sensor methods such as Biometric pressure sensor which provides vertical position of the device and Inertial Motion Unit (IMU) which provides displacement.

The positioning modes may be categorized in below three areas:
- *UE-Assisted*: The UE performs measurements with or without assistance from the network and sends these measurements to the E-SMLC where the position calculation may take place.
- *UE-Based*: The UE performs measurements and calculates its own position with assistance from the network.
- *Standalone*: The UE performs measurements and calculates its own without network assistance.

A new work item on "NR Positioning Support" has been agreed at 3GPP RAN#83. The objectives include:
*Study and, if agreed, specify system level aspects of the DownLink (DL)-only UE based positioning [RAN2]*

As part of this, DL Radio Access Technology (RAT) dependent Time Difference of Arrival (TDOA) based method has been agreed to be supported on UE Based Positioning mode.

For NR, frequency ranges up to 100 GHz are considered. Currently, two NR frequency ranges are explicitly distinguished in 3GPP: Frequency range one (FR1) which is below 6 GHz, and frequency range two (FR2) which is above 24 GHz. It is known that high-frequency radio communication above 24 GHz suffers from significant path loss and penetration loss. One solution to address this issue is to deploy large-scale antenna arrays to achieve high beamforming gain, which is a reasonable solution due to the small wavelength of high-frequency signal. Therefore, MIMO schemes for NR are also called massive MIMO.

Depending upon the possibility of generating and projecting a number of beams, three different beamforming architectures may be used. These architectures are as follows:
a) **Analog beamforming:** This approach shapes the beam through a signal Radio Frequency (RF) chain for all the antenna elements. The processing is done in analog domain and is possible to transmit and/or receive a beam in only one direction at a time.
b) **Hybrid beamforming:** This approach requires RF chains equivalent to the number of beams to be formed. An N RF chain hybrid beamformer can hence produce N beams and enables the transceiver to transmit/receive N analog beams in N simultaneous directions.
c) **Digital beamforming:** Unlike hybrid and analog beamforming architectures, the digital beamforming technique requires a separate RF chain and data converters for each antenna element and allows processing of the received signals in the digital domain. Digital beamforming potentially allows a transceiver to direct beams in infinite directions.

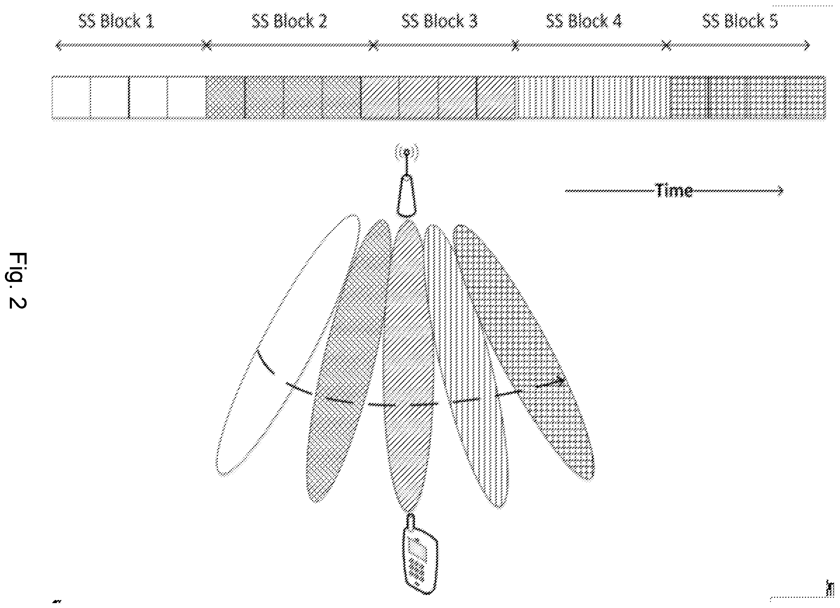

As a radio link signal is beamformed, the precision in the transmitter and the receiver beam alignment has important implication on initial access, handover and beam tracking procedures. An efficient beam management therefore has been a hot issue for the optimized 5G network operation and may comprise the following elements:
a) **Beam sweeping:** During operation a geographical area is covered by a set of beams transmitted and received according to a pre-defined intervals and direction in DL. Base stations typically perform transmit beam sweeping for its DL transmissions and may also implement receive beam sweeping for its UL receptions. UEs typically perform receive beam sweeping for its DL receptions but may also implement transmit beam sweeping for its UL transmissions. **Figure 2****:** depicts a beam sweeping procedure, here analogue beam sweeping and five beams, one beam at a time, in Synchronization Signal (SS) Block 1 to SS Block5.
b) **Beam measurements:** This procedure is valid for both UL and DL transmission. During this procedure the quality of the received signal at the gNodeB or at the UE, respectively, is evaluated. In DL, the UE measures on the beams from the gNodeB and analyses them, e.g., based on SS- Signal to Interference plus Noise Ratio (SINR), SS- Reference Signal Received Power (RSRP), SS-Reference Signal Received Quality (RSRQ), etc. A similar procedure is carried out at the gNodeB where the beam coming to the UE is measured; but the measurements are currently not specified and are up to the gNodeB implementation.
c) **Beam determination:** During this procedure a suitable or best beam is determined in the gNodeB and UE based on the beam measurements.
d) **Beam reporting:** This procedure is used by the UE to report the beam quality and the beam decision information to the radio access network.
e) **Beam failure recovery:** When a UE in connected mode experiences a poor channel condition, it receives a beam failure indication from the lower layer entities. The UE then requests for a beam recovery sending a message to gNodeB.

A problem will be identified and discussed under Detailed Description below.

### SUMMARY

An object of embodiments is to improve the handling of positioning of UEs in a wireless communications network.

According to an aspect of embodiments herein, the object is achieved by a method performed by a User Equipment, UE, for handling positioning of the UE in a wireless communications network. The UE is capable of working in a number of positioning modes for performing measurements for positioning of the UE. The UE receives a configuration from a radio network node operating in the wireless communications network. The configuration is to operate in a determined specific positioning mode out of the number of positioning modes, for a determined certain time duration. The UE then performs positioning of the UE according to the configuration based on positioning assistance data from any one out of: the radio network node, and a core network node operating in the wireless communications network.

According to another aspect of embodiments herein, the object is achieved by a method performed by a core network node for handling positioning of a User Equipment, UE, in a wireless communications network. The core network node obtains information that the UE is capable of working in a number of positioning modes for performing measurements for positioning of the UE. The core network node determines a specific positioning mode out of the number of positioning modes, for the UE to operate in for a determined certain time duration. The core network node then sends to a radio network node serving the UE, a grant to operate in the determined specific positioning mode during the determined certain time duration.

According to another aspect of embodiments herein, the object is achieved by a method performed by a radio network node for handling positioning of a User Equipment, UE in a wireless communications network.

The radio network node receives a grant from a core network node. The grant is for the UE to operate in a determined specific positioning mode out of the number of positioning modes, during a determined certain time duration, in which number of positioning modes the UE is capable of working for performing measurements for positioning of the UE.

The radio network node determines a configuration to operate in a determined specific positioning mode during the determined certain time duration, based on the received grant.

The radio network node then sends to the UE, the determined configuration for performing positioning of the UE according to the determined configuration.

According to another aspect of embodiments herein, the object is achieved by a User Equipment, UE, for handling positioning of the UE in a wireless communications network. The UE is capable of working in a number of positioning modes for performing measurements for positioning of the UE. The UE being configured to:
Receive from a radio network node operable in the wireless communications network, a configuration to operate in a determined specific positioning mode out of the number of positioning modes, for a determined certain time duration, and perform positioning of the UE according to the configuration based on positioning assistance data from any one out of: the radio network node and a core network node operable in the wireless communications network.

According to yet another aspect of embodiments herein, the object is achieved by a core network node for handling positioning of a User Equipment, UE in a wireless communications network. The core network node is configured to:
Obtain information that the UE is capable of working in a number of positioning modes for performing measurements for positioning of the UE,
determine a specific positioning mode out of the number of positioning modes, for the UE to operate in for a determined certain time duration, and
send to a radio network node serving the UE, a grant to operate in the determined specific positioning mode during the determined certain time duration.

According to yet another aspect of embodiments herein, the object is achieved by a radio network node for handling positioning of a User Equipment, UE in a wireless communications network. The radio network node being configured to:
Receive from a core network node, a grant for the UE to operate in a specific positioning mode out of the number of positioning modes, during a certain duration, in which number of positioning modes the UE is capable of working for performing measurements for positioning of the UE,
determine a configuration to operate in a determined specific positioning mode during a certain duration, based on the received grant, and
send to the UE, a determined configuration for performing positioning of the UE according to the determined configuration.

It is furthermore provided herein a plurality of computer program products comprising instructions, which, when executed on at least one processor, cause the at least one processor to carry out any of the methods above, as performed by the user equipment or the radio network node or the core network node. It is additionally provided herein a plurality of computer-readable storage media, having stored there on a computer program product comprising instructions which, when executed on at least one processor, cause the at least one processor to carry out the method according to any of the methods above, as performed by the core network or the radio network node or the user equipment.

### BRIEF DESCRIPTION OF THE DRAWINGS

Examples of embodiments herein are described in more detail with reference to attached drawings in which:
- Figure 1: is a schematic block diagram illustrating prior art.
- Figure 2: is a schematic block diagram illustrating prior art.
- Figure 3: is a schematic block diagram illustrating embodiments of a wireless communications network.
- Figure 4: is a sequence diagram illustrating embodiments herein.
- Figure 5: is a flowchart depicting embodiments of a method in a UE.
- Figure 6: is a flowchart depicting embodiments of a method in a core network node.
- Figure 7: is a flowchart depicting embodiments of a method in a radio network node.
- Figures 8: is a schematic block diagram illustrating embodiments herein.
- Figures 9: a and b are schematic block diagrams illustrating embodiments of a UE.
- Figures 10: a and b are schematic block diagrams illustrating an embodiment of a core network node.
- Figures 11: a and b are schematic block diagrams illustrating an embodiment of a radio network node.
- Figure 12: schematically illustrates a telecommunication network connected via an intermediate network to a host computer.
- Figure 13: is a generalized block diagram of a host computer communicating via a base station with a user equipment over a partially wireless connection.
- Figures 14-17: are flowcharts illustrating methods implemented in a communication system including a host computer, a base station and a user equipment.

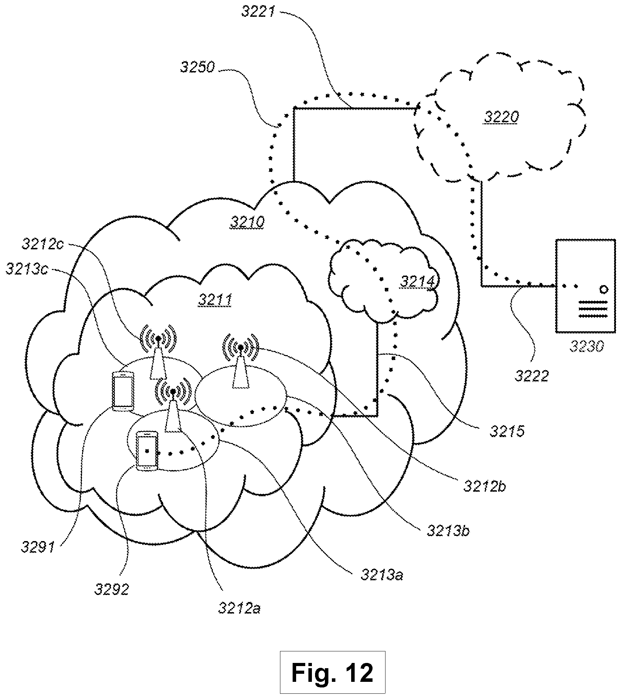

The figures 12-17 and corresponding description are not covered by the claimed invention.

### DETAILED DESCRIPTION

As a part of developing embodiments herein the inventors identified a problem which first will be discussed.

NR in FR2 (Frequency region 2) is a millimeter wave (mmWave) length based technology where signal propagation is a challenge this requiring beam based technique to compensate the propagation loss to some extent.
mmWave is a short-range, operating in high-frequency. Thus, the positioning procedure would vary comparing to LTE. mmWave is the band of spectrum between 30 Ghz and 300 Ghz.

For both UE assisted and UE-based OTDOA procedure, a Network (NW) node, such as LMF/E-SMLC, needs to prepare the beam list that UE needs to perform Reference Signal Time Difference (RSTD) measurements on. The procedure needed for beam selection for both modes needs to be specified.

For a UE based positioning method, the network may broadcast the co-ordinates of beams and/or cells using Radio Resource Control (RRC) System Information Broadcast (SIB) messages. However, the longitude and latitude information along with other parameters such as height etc. takes around 100 bits. Because of physical layer size limitation, it may not be possible to transmit more than 25 cells and/or beams Transmission Point (TP) co-ordinates using one System information (SI) message. Further considering that other info such as cell ID, Positioning Reference Signals (PRS) Identity (ID), E-UTRA Absolute Radio Frequency Channel Number (EARFCN), Real Time Difference (RTD) etc. needs to be also broadcast the total TP Co-ordinates that can be broadcast would be around 10 TP-Coordinates. It is expensive resource wise to use multiple System information message for this purpose. Moreover, the system information broadcast is common for all UEs in a cell or beam, while only a small number of UEs may need this information in addition to that the same list cannot be optimal for all these UEs. Network should keep track of geometry and evaluate which beams or cells co-ordinates should be broadcast such that majority of UEs can compute the location with high accuracy. The assistance data delivery mechanism needs to be smart and efficient such that NW broadcast is lean, and UE can determine the location accurately and without having the requirement to process large number of beams in the beam list.

The TP or Access Point (AP) location is represented by below attributes. The total size is around 100bits. The SI maximum size can be 2976 bits. Further, the below TP for LTE would have to be further updated for NR which may further increase the total size.

| | |
|---|---|
| E-UTRANAccessPointPosition :: | = SEQUENCE ( |
| latitudeSign | ENUMERATED (north, south), |
| latitude | INTEGER (0..8388607), |
| longitude | INTEGER (-8388608..8388607), |
| directionOfAltitude | EUMERATED (height, depth), |
| altitude | INTEGER (0..32787), |
| uncertaintySemi-major INTEGER (0..127), | |
| uncertaintySemi-minor | INTEGER (0..127), |
| orientationOfMajorAxis | INTEGER (0..179), |
| uncertaintyAltitude | INTEGER (0..127), |
| confidence | INTEGER (0..100), |

Thus, it would be resource consuming to include NR AP co-ordinate information to the UE via broadcast. Further, broadcast information is common to all UEs and it may not be suitable for all the UE in the cell.

Further in FR2 PRS need to be transmitted in a beam to compensate the higher path loss at higher carrier frequencies. The PRS transmission to all beam sweeping directions results in an unnecessary transmission of PRSs and thus a mechanism is needed to select the most suitable beams for PRS transmission.

In FR2, to minimize PRS overhead, the NW may need to obtain the measurement results from the UE; regarding the beam PRS utilization, number of UEs, UE distribution, PRS RSRP, TDOA uncertainty, errors etc. For UE based mode, the UE may perform positioning in idle and/or inactive mode or even in RRC connected mode but without being LTE Positioning Protocol (LPP) connected. Thus, LMF may not be aware of NW resource utilization.

An object of embodiments herein may therefore to improve the handling of positioning of UEs in a wireless communications network.

Example embodiments herein provide methods to handling, e.g. to Control, Positioning Modes, for example relating to Positioning, UE Capability, Positioning modes, switch between positioning modes and Energy Savings.

Example embodiments herein provide a control mechanism for the positioning mode that a UE may operate in.

In some embodiments a core network node such as an LMF provides a grant to use a certain positioning mode for a certain duration. This may also be referred to as "asserting" a certain positioning mode. This information about the grant to use the certain positioning mode for the certain duration is then provided to the radio network node such as an NR base station, and is further provided to the UE.

The word duration when used herein may be referred to as a time duration or a time interval. The information about the certain duration may point out the point in time when the duration starts, the expiration time of the duration and/or how long time the duration is.

The certain duration may e.g. be configured by operator implying the duration when the radio network node is not congested or congested and when the radio network node considers obtaining the measurement result from UEs operating in UE based mode is important for DL-PRS overhead reductions or to save transmission power.

Advantages of embodiments herein comprise:
- Ability to control positioning mode and toggle between different positioning modes.
- Ability to obtain necessary measurement reports to optimize network resources by asserting positioning mode to a UE assisted. The network may herein e.g. mean a radio network node, radio base station, and/or a Transmission Reception Point (TRP). The resources may refer to time frequency resource grid and power. NW when used herein means radio network node.
- Provide UE specific positioning resources by asserting positioning mode to an assisted UE.
- Allow a UE to compute location on the UE and/or device side without having the UE to be in LPP connected by asserting the positioning mode to UE based positioning mode.
- A Mechanism to save energy by switching off unused TRPs.

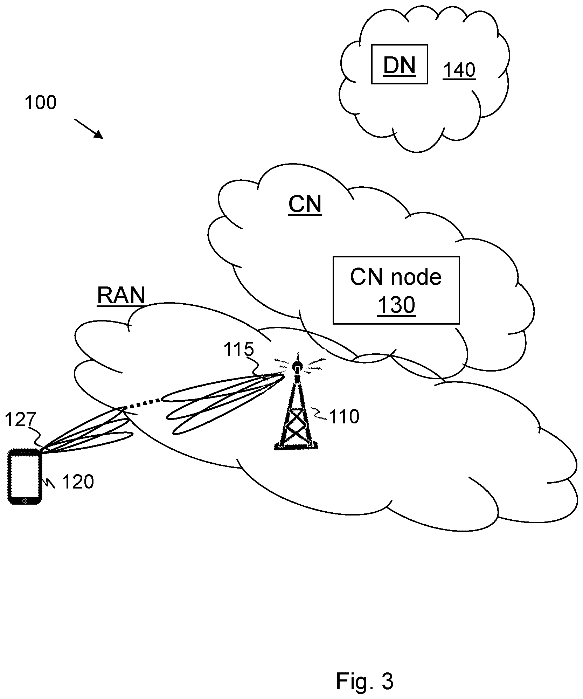

**Figure 3** is a schematic overview depicting a **wireless communications network 100** wherein embodiments herein may be implemented. The wireless communications network 100 comprises one or more **RANs** and one or more CNs. The wireless communications network 100 may use 5G NR but may further use a number of other different technologies, such as, Wi-Fi, (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

Network nodes such as a **radio network node 110,** also referred to as the network node 110, operates in the wireless communications network 100, providing radio coverage by means of antenna beams, referred to as beams herein. The radio network node 110 provides a number of **beams 115,** and may use these beams for communicating with e.g. a UE 120. The radio network node 110 provides radio coverage over a geographical area by means of antenna beams. The geographical area provided by the antenna beams may also be referred to as a number of SpCells, a service area, beam or a group of beams. The radio network node 110 may be a transmission and reception point e.g. a radio access network node such as a base station, e.g. a radio base station such as a NodeB, an evolved Node B (eNB, eNode B), an ng-eNB, an NR Node B (gNB), a base transceiver station, a radio remote unit, an Access Point Base Station, a base station router, a transmission arrangement of a radio base station, a stand-alone access point, a Wireless Local Area Network (WLAN) access point, an Access Point Station (AP STA), an access controller, a UE acting as an access point or a peer in a Device to Device (D2D) communication, or any other network unit capable of communicating with a UE within the cell served by radio network node 110 depending e.g. on the radio access technology and terminology used.

UEs operate in the wireless communications network 100, such as a **UE 120.** The UE 120 may provide radio coverage by means of a number of antenna **beams 127,** also referred to as beams herein.

The UE 120 according to embodiments herein is capable of working in a number of positioning modes for performing measurements for positioning of the UE 120.

The UE 120 may e.g. be an NR device, a mobile station, a wireless terminal, an NB-loT device, an eMTC device, a CAT-M device, a WiFi device, an LTE device and an a non-access point (non-AP) STA, a STA, that communicates via a base station such as e.g. the radio network node 110, one or more Access Networks (AN), e.g. RAN, to one or more core networks **(CN).** It should be understood by the skilled in the art that the UE 120 relates to a non-limiting term which means any UE, terminal, wireless communication terminal, user equipment, (D2D) terminal, or node e.g. smart phone, laptop, mobile phone, sensor, relay, mobile tablets or even a small base station communicating within a cell.

Core network nodes such as a **core network node 130** operate in the CN of the wireless communications network 100. The core network node 130 may e.g. be an LMF node or an E-SMLC node.

Methods herein may be performed by network nodes such as the UE 120, the network node110, and the core network node 130. As an alternative, a Distributed Node (DN) and functionality, e.g. comprised in a **cloud 140** as shown in Figure 3, may be used for performing or partly performing the methods.

Embodiments herein provide methods and examples to handle, such as control, the different positioning modes that UE 120 may be in. Depending upon the NW need, the core network node 130 may specify which mode the UE 120 may operate in and durations. The NW may e.g. be the core network node 130 such as an LMF node or the radio network node 110 such as a radio base station.

An example may be that the UE 120 may make a mobile originated location request where the NW would configure the positioning resources, e.g. PRS resources, and provide the assistance information to the UE 120. According to embodiments herein, the NW may then indicate that the UE 120 is granted to use UE based positioning, at which point the UE 120 no longer needs LPP connection, so the UE 120 may e.g. go back to idle mode and continue to compute its position by itself for a while. The provision of positioning resources per beam in FR2 (mm-wave) is a high overhead, so by indicating a validity time or similar, the duration, after which the UE 120 no longer has valid assistance information to compute its own position, these resources do not need to remain allocated indefinitely. Moreover, to optimize these resources for a particular UE such as the UE 120, or UEs, the positioning node such as the core network node 130 may need some measurement reports from the UE 120. So then it may toggle UEs that are doing UE based positioning back to UE assisted positioning to obtain these reports. Also, in some embodiments assistance information may be provided for all possible mm wave beams from all possible TRP and the size of the positioning information, so as well as optimizing the transmitted positioning resources, this approach allows the assistance info that is given to the UE 120 to be only the resources that are actually active which keeps the size of assistance information under control.

An example of a method as seen from the **UE** 120 side comprises:
The UE 120 may provide the core network node 130, with its capability of performing positioning measurements and associated positioning modes capability. "Associated positioning modes" when used herein e.g. means UE assisted or UE based positioning modes.

The UE 120 may requests positioning assistance data, e.g. from the radio network node 110 or the core network node 130.

The UE 120 receives a configuration e.g. a grant from the radio network node 110 and/or the core network node 130 to operate in certain positioning mode for certain duration.

The UE 120 performs positioning based on the support from the radio network node 110 and/or the core network node 130 during the configured duration.

An example of a method as seen from the from the **core network node** 130 such as the LMF side, comprises.

The core network node 130 may obtain the capability from UE 120 if the UE 120 is capable of performing certain positioning measurements and associated positioning mode capability.

The core network node 130 determines positioning mode and provides a grant with positioning mode and duration.

An example of a method as seen from the radio network node 110, such as e.g. the base station, side, comprises.

The radio network node 110 provides e.g. via System Info Broadcast a grant with positioning mode and duration as received from the core network node 130 such as the LMF e.g. in NRPPa or based upon radio network node 110 such as e.g. base station decisions.

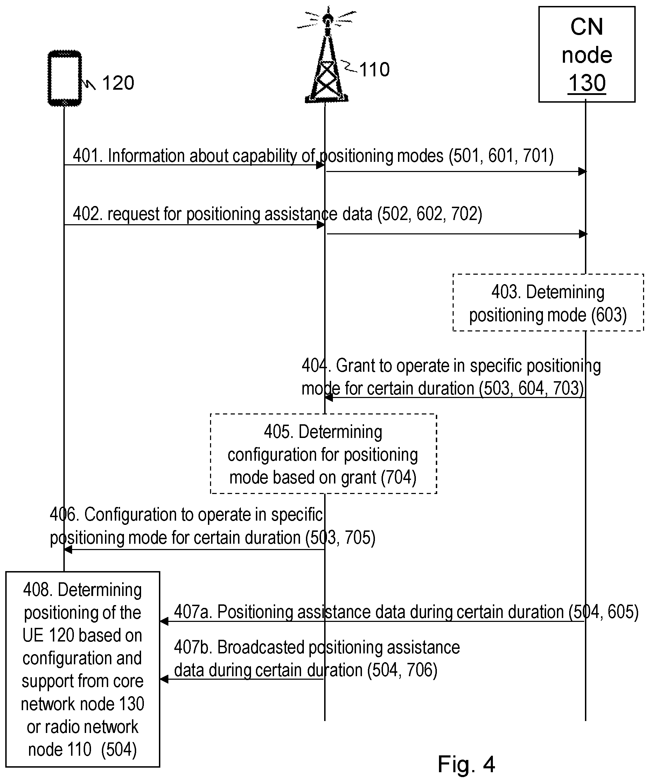

**Figure 4** shows a sequence diagram of an example of a **method performed by the UE 120, the radio network node 110 and the core network nod 130** e.g. for controlling e.g. handling positioning of the UE 120 in the wireless communications network 100. The method may comprise any one or more of the actions below.

### Action 401

Information about the UEs capability of using positioning modes is sent from the UE 120 to the radio network node 110 and further to the core network node 130. (See also actions 501 and 601 below).

### Action 402

E.g. when positioning is needed, the UE 120 sends a request for positioning assistance data to the radio network node 110 and/or the core network node 130. (See also actions 502, 602 below.)

Such positioning assistance data may e.g. be Assistance data for a GNSS Positioning method and may be various satellite correction information, such as satellite orbital error, atmospheric and ionospheric delays and errors. Further positioning assistance data may e.g. comprise cell ID, PRS ID, EARFCN, Real Time Difference (RTD).

Assistance data for RAT based methods e.g. comprises:
- PRS configuration of the Transmission and Reception Points
- Periodicity of the PRS transmission from the Transmission and Reception points.
- Locations of the transmission and reception points (if the positioning method is UE based).
- PRS search window to assist UE identify where in time to find the PRS from the Transmission and Reception Points.
- Expected RSTD of arrival of PRS from different Transmission and Reception Points.

### Action 403

The core network node 130 determines which positioning mode the UE 120 shall use. This may e.g. be based on what the core network node 130 needs and the capability that the UE 120 has. (See also action 603 below.)

### Action 404

The core network node 130 sends to the radio network node 110, a grant for the UE 120 operate in a specific positioning mode, i.e. the determined positioning mode for a certain duration. (See also actions 503, 604 below.)

### Action 405

The radio network node 110 may then determine a configuration for positioning mode based on the received grant. (See also action 704 below.)

### Action 406

The radio network node 110 sends to the UE 120, the determined configuration to operate in specific positioning mode for certain duration. (See also actions 503, 705 below.)

### Action 407a

In some embodiments, the UE 120 is assisted in the positioning by the core network node 130. The positioning assistance data is then sent from the core network node 130 to the UE 120 during the certain duration. (See also actions 504, 605 below.)

### Action 407b

In some alternative embodiments, the UE 120 is assisted in the positioning by the radio network node 110. The radio network node 110 may then broadcast positioning assistance data during certain duration. (See also actions 504, 705 below.)

### Action 408.

The UE 120 then performs positioning e.g. by determine positioning of UE 120. This is based on configuration and support such as assistance from the core network node 130 or the radio network node 110 (See also action 504 below.)

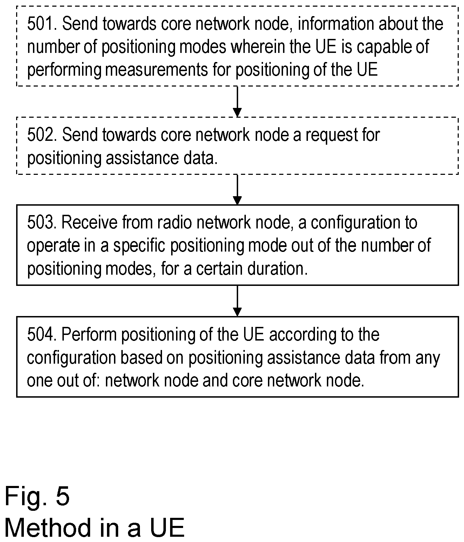

**Figure 5** shows an example method performed by the UE 120, e.g. for handling positioning of the UE 120 in a wireless communications network 100. The UE 120 is capable of working in a number of positioning modes for performing measurements for positioning of the UE 120. The method may comprise any one or more of the actions below.

In optional **Action 501,** the UE 120 sends information towards the core network node 130, such as e.g. an LMF node. The information is about the number of positioning modes wherein the UE 120 is capable of performing measurements for positioning of the UE 120.

In optional **Action 502,** the UE 120 sends a request towards the core network node 130. The request is a request for positioning assistance data. The positioning assistance data may e.g. be Assistance data for a GNSS Positioning method which may comprise various satellite correction information. This may e.g. comprise satellite orbital errors, and atmospheric and ionospheric errors. The positioning assistance data will e.g. be used for computing location or performing location related measurements.

In **Action 503,** the UE 120 receives a configuration from the radio network node 110. The configuration relates to operate in a specific positioning mode out of the number of positioning modes, for a certain duration. The certain duration may e.g. be busy hours or non-busy hours, congested period or non-congested period. The duration determined by the radio network node 110 which evaluates the need for UE immediate measurement results such as e.g. positioning measurement results including quality of measurements, to ascertain the DL-PRS beam utilizations.

In **Action 504,** the UE 120 performs positioning of the UE 120 according to the configuration. The positioning of the UE 120 is based on positioning assistance data from any one out of: The radio network node 110, and the core network node 130.

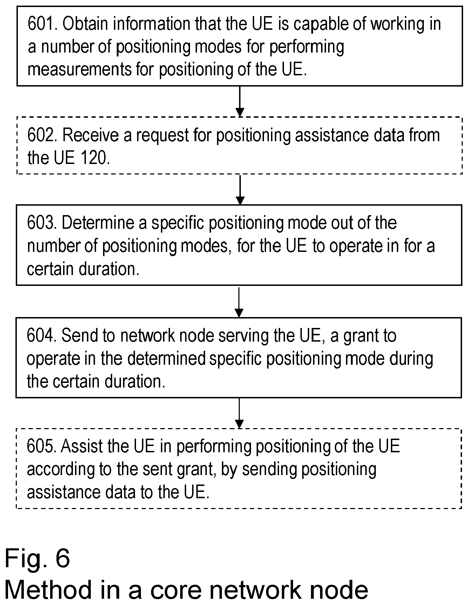

**Figure 6** shows an example method performed by the core network node 130, e.g. for handling positioning of the UE 120 in the wireless communications network 100. The method may comprise any one or more of the actions below.

In **Action 601,** the core network node 130 obtains information that the UE 120 is capable of working in a number of positioning modes for performing measurements for positioning of the UE 120.

In optional **Action 602,** the core network node 130 receives a request for positioning assistance data from the UE 120. The positioning assistance data may e.g. be positioning assistance data for a GNSS Positioning method, which may comprise various satellite correction information, such as satellite orbital errors, atmospheric and ionospheric delays and errors. The positioning assistance data may further e.g. be PRS configuration of the TRPs, Periodicity of the PRS transmission from the TRPs, Locations of the transmission reception points if the positioning method is UE based, PRS search window to assist UE identify where in time to find the PRS from the TRPs, Expected Reference Signal Time Difference (RSTD) of arrival of PRS from different TRPs.

In **Action 603,** the core network node 130 determines a specific positioning mode out of the number of positioning modes, for the UE 120 to operate in for a certain duration.

In **Action 604,** the core network node 130 sends a grant to the radio network node 110 serving the UE 120. The grant is for the UE 120 to operate in the determined specific positioning mode during the certain duration.

The grant may be considered as a flag that puts a requirement to UEs such as the UE 120, operating in that cell to provide positioning measurements reports. Further, the grant from the core network node to the radio network node 110 may imply starting or stopping of the provisioning of AD for certain positioning mode from the radio network to the UEs operating in the cells belonging to that radio network node.

In optional **Action 605,** the core network node 130 may assist the UE 120 in performing positioning of the UE 120 according to the sent grant, by sending positioning assistance data to the UE 120.

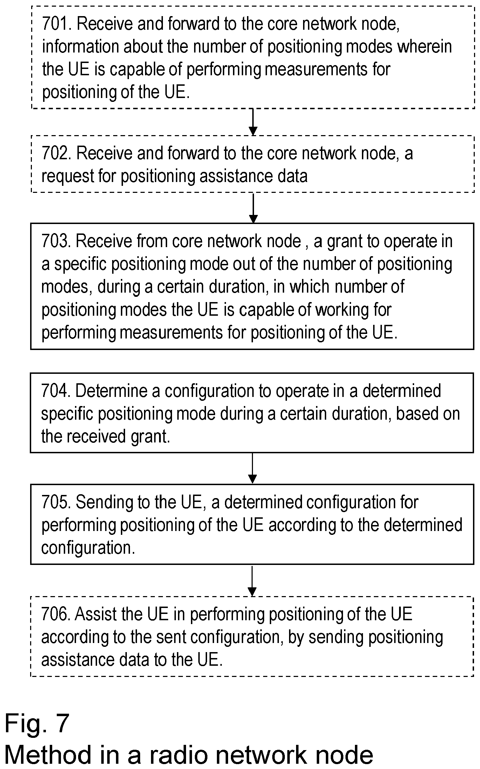

**Figure 7** shows an example method performed by a radio network node 110, e.g. for handling positioning of the UE 120 in the wireless communications network 100. The method may comprise any one or more of the actions below.

In optional **Action 701,** the radio network node 110 receives and forwards to the core network node 130, information that the UE 120 has sent towards the core network node 130. The information is about the number of positioning modes wherein the UE 120 is capable of performing measurements for positioning of the UE 120.

In optional **Action 702,** the radio network node 110 receives and forwards a request towards the core network node 130. The request is a request for positioning assistance data.

In **Action 703,** the radio network node 110 receives a grant from the core network node 130. The grant is a grant for the UE 120 to operate in a specific positioning mode out of the number of positioning modes, during a certain duration. In the number of positioning modes, the UE 120 is capable of working for performing measurements for positioning of the UE 120.

In **Action 704,** the radio network node 110 determines a configuration to operate in a determined specific positioning mode during a certain duration, based on the received grant.

In **Action 705,** the radio network node 110 sending to the UE 120, the determined configuration for performing positioning of the UE 120 according to the determined configuration.

In optional **Action 706,** the radio network node 110 assists the UE 120 in performing positioning of the UE 120 according to the sent grant by sending, e.g. broadcasting, positioning assistance data to the UE 120.

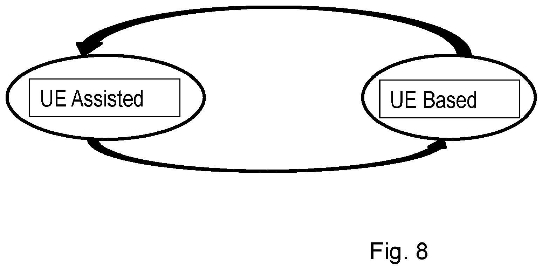

**Figure 8** illustrates how the UE 120 toggles, also referred to as switches, states with different positioning modes e.g. from UE Assisted positioning mode to UE Based positioning mode, and from UE based positioning mode to UE assisted positioning mode. The UE 120 toggles positioning mode e.g. based upon NW command, such as the grant and/or configuration the UE 120 has received from the base station 110.

The embodiments described above will now be further explained and exemplified. The example embodiments described below may be combined with any suitable embodiment above.

In some embodiments, for a UE originating location request, when the UE 120 initiates a location service in order to obtain assistance data from the Network such as the core network node 130 or to verify it's obtained location, the UE 120 may reports its positioning measurement and positioning mode capabilities to the NW node such as the core network node 130. The core network node 130 may then provide and/or grants the positioning mode that the UE 120 should operate in. In alternate embodiment, if the UE 120 supports UE based mode, it has to request to the NW such as the core network node 130 to obtain a grant to operate in the UE's 120 preferred positioning mode.

In yet some other embodiments, the UE 120 provides duration information to the network such as the core network node 130. This duration information is associated to the duration during which the UE 120 requests positioning assistance for, also referred to as support for.

In some embodiments, when the radio network node 110 such as a base station provides the positioning assistance data via broadcast, it may insert the positioning mode that the UE 120 can operate in. This information may be part of the positioning System Information Block (SIB) scheduling information. Thus, it may include the positioning mode that the UE 120 should operate while being in a particular cell. The core network node 130 such as an LMF node, may provide the positioning mode information to the radio network node 110 such as the base station via NRPPa or the radio network node 110 may independently decide based upon the positioning resource overhead.

Positioning resource overhead may imply that a number of beams requires PRS to be transmitted, the number of UEs utilizing the PRS, the UEs distribution across different beams, Energy consumption of the TRP, need of positioning accuracy level. Some of these inputs may be obtained from core network node 130 such as the LMF node.

In some embodiments, along with the positioning mode, the NW such as the core network node 130 may also provide the duration which the UE 120 should operate in that specific positioning mode. Upon the expiry of such duration, the UE 120 may toggle the positioning mode up to its desire.

Further, the positioning mode may be valid for a group of cells and may be combined with area scope and system information Area ID as defined in 3GPP TS 38.331 v15.7.0:
**System Information Area Identity (*systemInformationAreaID*)**

*SystemInformationAreaID* indicates the system information area that a cell belongs to, if any. Any SIB with *areaScope* within the System Information (SI) is considered to belong to this *systemInformationAreaID.* The systemlnformationArealD is unique within a Public Land Mobile Network (PLMN).

### Area Scope (areaScope)

The *areaScope* indicates that a SIB is area specific. If the field is absent, the SIB is cell specific.

In some embodiments, the NW node such as the core network node 130 may use the handling such as the control of positioning mode for only certain positioning methods or measurements. An example, for multi-cell Round Trip Time (RTT) positioning method, the NW such as the core network node 130 may say that the UE 120 can operate in UE based positioning mode. However, for positioning methods using measurements based upon DL-TDOA may sometimes only operate in UE assisted mode.

In some embodiments, a deployment may prefer certain positioning mode during certain traffic hours such as the positioning mode may be toggled based upon traffic busy or non-busy hours.

In some embodiments, the radio network node 110, such as the base station, may indicate the duration for which a positioning mode is supported. In one mode, the duration is configured as an expiration time.

In some embodiments, the UE 120 may request a positioning mode to be supported such as assisted, after a configured duration or beyond a configured expiration time. The request may be provided directly to the radio network node 110 such as the base station e.g. via an RRC protocol, an on demand system information broadcast trigger such as random access, or via an assistance data request message.

In some embodiments, the UE 120 may autonomously switch the positioning mode from UE based to UE assisted when it determines that the positioning result has high degree of uncertainty, large raging errors, or has poor Geometric dilution of precision. The UE 120 may also autonomously switch the positioning mode from UE assisted to UE based when the UE 120 determines that it has enough information to be able to compute the location on its side with some prediction that the obtained location would be of good quality. The decision and/or prediction may be based upon good Geometric Dilution of Precision (GDOP) results and low positioning errors and uncertainties while in UE assisted mode and the amount of assistance data that is available. If assistance data for example only contains TRP co-ordinate and no Real Time difference (RTD), the UE such as the UE 120 may decide to be in UE assisted mode whereas when both are available the UE such as the UE 120 may switch from UE assisted to UE based. RTD is real time difference between two cells. The decision to switch may further be based upon the quality of RTD.

See some examples of embodiments below relating to UE-based configuration options and applicable examples for implementation.

### UE-based positioning and capabilities.

The capabilities for different positioning components are quite detailed in the previous specification versions of the standard, and are not separated in UE-based or UE-assisted. Therefore, it is relevant to introduce UE-based without dedicated capabilities according to embodiments herein. That means a UE such as the UE 120 that indicates support for a positioning capability, supports both UE-based and UE-assisted positioning associated to the specific capability.

The following examples are not covered by the claimed invention, they are present for illustrations purposes only:
Example 1: Capability indications for NR RAT dependent positioning in Rel 16 are agnostic to UE-based or UE-assisted versions of the positioning method, applicable for the positioning methods that supports both UE assisted and UE based positioning.

In case there are concerns about the agnostic support for positioning features, there should be mandatory support for UE-assisted positioning features associated to a set of specific and listed contexts in case UE-based positioning is supported. With devices such as the UE 120 effectively only supporting UE-assisted positioning for emergency calls, the operator gets very limited possibilities to monitor the network performance and to establish coverage maps. Therefore, it is suggested that the support for UE-assisted positioning together with UE-based is associated to a set of network management use cases in case example 1 has not been agreed.

Example 2: Capability indications for NR RAT dependent positioning in Rel 16 are agnostic to UE-based or UE-assisted versions of the positioning method, applicable for the positioning methods that supports both UE assisted and UE based positioning, restricted to network management use cases for initiating positioning.

The in-time parallel work item on SON and MDT in Release 16 introduces location information to be included in certain reports from the UE to the network, where the reports include:
- RLF report
- RACH report
- Logged MDT
- Immediate MDT
- Connection Establishment Failure Report

These reports help the operator to identify coverage holes and other issues in the network. With location information included, these issues can also be located spatially to pinpoint the problem areas. In LTE, location information was only added on an availability basis (Rel-10) and with a dedicated request to obtain the location information (Rel-11) based on GNSS.

Devices such as the UE 120 engaged in UE-based positioning will also have location information available, which enables a very valuable source of information for the operator, while making UE-based positioning enabled to devices.

Therefore, a target device such as the UE 120 that is configured with UE based positioning and is configured with one of the SON/MDT reports shall include its position estimate in the location information in the report.

Example 3: A UE such as the UE 120 configured for UE-based positioning has per definition location information available.

Example 4: A UE such as the UE 120 configured for UE-based positioning shall include location estimate information in the location information IE in all triggered RLF reports, RACH reports, Logged MDT reports, Immediate MDT reports, Connection establishment failure reports, and other reports in which the location information IE can be included.

Furthermore, in relation to Example 2, with agnostic support for a capability that is configurable for both UE-based and UE-assisted positioning, it is possible to request location information associated to UE assisted positioning to be reported together with the listed SON/MDT reports. Given the agnostic positioning capability support, the UE shall include location information in the SON/MDT reports if it supports a specific capability.

Example 5: Given support for a UE-based/UE-assisted agnostic capability for NR RAT dependent positioning, the UE such as the UE 120 shall provide associated location information in UE-assisted or UE-based mode in all triggered RLF reports, RACH reports, Logged MDT reports, Immediate MDT reports, Connection establishment failure reports, and other reports in which the location information IE may be included.

It should be deployment preference to allow the UE such as the UE 120 to operate in certain positioning modes. Depending upon:
- the need to actively obtain the measurement results in order to tune the network resource suitable for the UE based beam transmission.
- to be able to save energy (turn off DL PRS beams that are in NLOS or not contributing to positioning measurements)
- Number of UEs, UE distribution in a local geographical area. For example, if there are few UEs in a cell, the DL-PRS beams may be more aligned for these UEs; i.e there is no need to have a complete beam coverage (360 degrees) all the time. The number of neighbor beams can also be minimized.

Example 6: Allow a deployment to specify which positioning mode the UE such as the UE 120 may operate in.

Based on the discussion in the previous section the following examples are provided:
Example 1: Capability indications for NR RAT dependent positioning in 3GPP Release 16 are agnostic to UE-based or UE-assisted versions of the positioning method, applicable for the positioning methods that supports both UE assisted and UE based positioning.
Example 2: Capability indications for NR RAT dependent positioning in 3GPP Release 16 are agnostic to UE-based or UE-assisted versions of the positioning method, applicable for the positioning methods that supports both UE assisted and UE based positioning, restricted to network management use cases for initiating positioning.
Example 3: A UE such as the UE 120, configured for UE-based positioning has per definition location information available.
Example 4: A UE such as the UE 120 configured for UE-based positioning shall include location estimate information in the location information IE in all triggered RLF reports, RACH reports, Logged MDT reports, Immediate MDT reports, Connection establishment failure reports, and other reports in which the location information IE can be included.
Example 5: Given support for a UE-based/UE-assisted agnostic capability for NR RAT dependent positioning, the UE shall provide associated location information in UE-assisted or UE-based mode in all triggered RLF reports, RACH reports, Logged MDT reports, Immediate MDT reports, Connection establishment failure reports, and other reports in which the location information IE may be included.
Example 6: Allow a deployment to specify which positioning mode the UE such as the UE 120 may operate in.

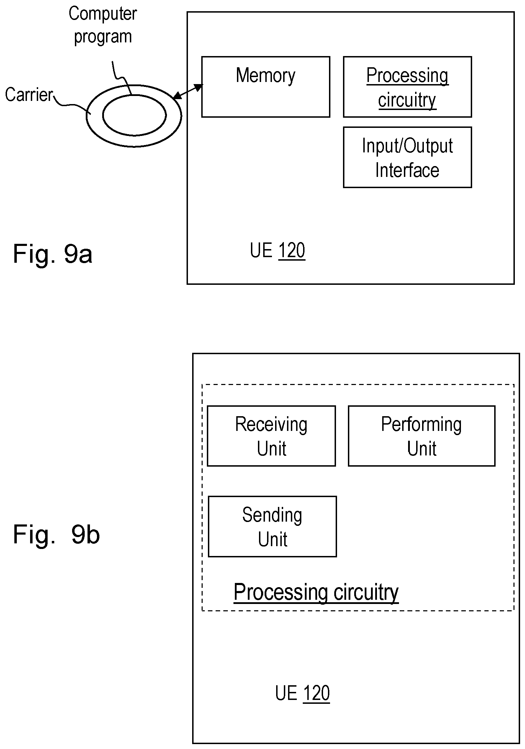

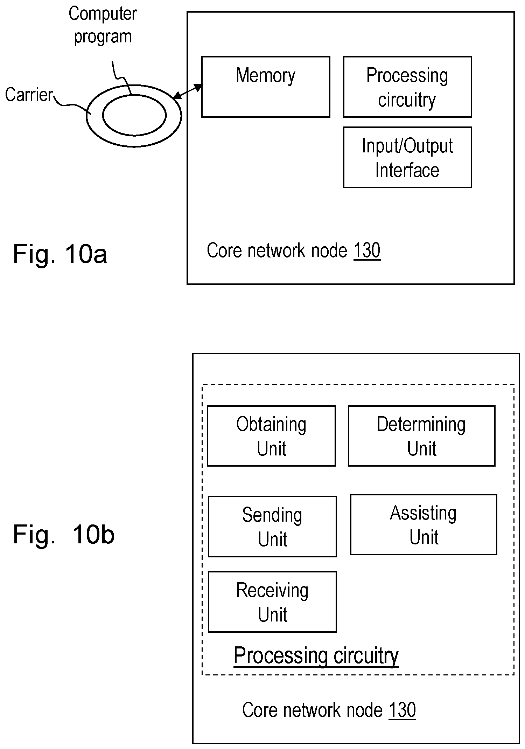

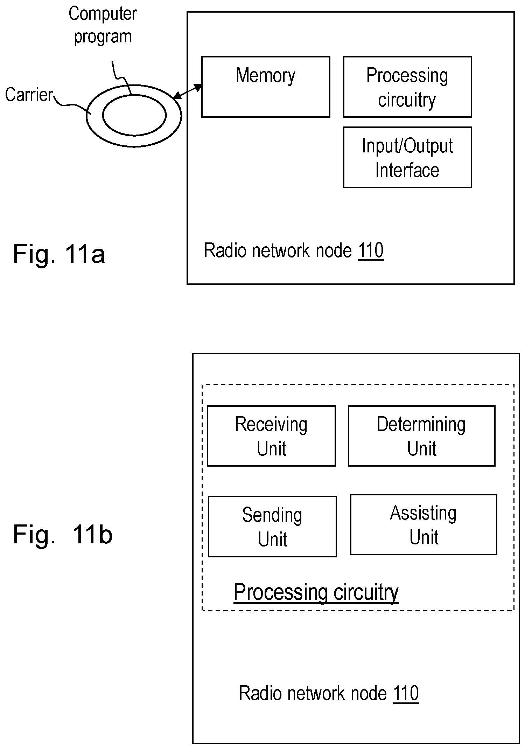

**Figures 9a** and **9b** show an example of the UE 120, **Figures 10a** and **10b** show an example of the core network node 130, and **Figures 11a** and **11b** show an example of the radio network node 110. The following examples are covered by the claimed invention.

The UE 120, the core network node 130 and the radio network node 110, may each comprise a respective **input and output interface** configured to communicate with each other, see Figures 9b, 10b, and 11b. The input and output interface may comprise a wireless receiver (not shown) and a wireless transmitter (not shown).

The UE 120 may further comprise a **receiving unit,** a **performing unit,** and a **sending unit,** see Figure 9a.

The core network node 130 may further comprise an **obtaining unit,** a **determining unit,** a **sending unit,** an **assisting unit** and a **receiving unit,** see Figure 10a.

The radio network node 110 may further comprise a **receiving unit,** a **determining unit,** a **sending unit,** and an **assisting unit,** see Figure 11a.

The embodiments herein may be implemented through a respective processor or one or more processors, such as the respective processor of a **processing circuitry** in the UE 120, the core network node 130 and the radio network node 110, and depicted in Figures 9b, 10b and 11b together with computer program code for performing the functions and actions of the embodiments herein. The program code mentioned above may also be provided as a computer program product, for instance in the form of a data carrier carrying computer program code for performing the embodiments herein when being loaded into the respective UE 120, core network node 130 and radio network node 110. One such carrier may be in the form of a CD ROM disc. It is however feasible with other data carriers such as a memory stick. The computer program code may furthermore be provided as pure program code on a server and downloaded to the respective UE 120, core network node 130 and radio network node 110.

The UE 120, the core network node 130 and the radio network node 110 may each further comprise a respective memory comprising one or more memory units. Each memory comprises instructions executable by the processor in UE 120, the core network node 130 and the radio network node 110.

Each respective memory is arranged to be used to store e.g. information, data, configurations, and applications to perform the methods herein when being executed in the respective UE 120, core network node 130 and radio network node 110.

In some embodiments, a respective computer program comprises instructions, which when executed by the at least one processor, cause the at least one processor of the respective UE 120, core network node 130 and radio network node 110 to perform the actions above.

In some embodiments, a respective carrier comprises the respective computer program, wherein the carrier is one of an electronic signal, an optical signal, an electromagnetic signal, a magnetic signal, an electric signal, a radio signal, a microwave signal, or a computer-readable storage medium.

Those skilled in the art will also appreciate that the units in the units described above may refer to a combination of analog and digital circuits, and/or one or more processors configured with software and/or firmware, e.g. stored in the respective UE 120, core network node 130 and radio network node 110, that when executed by the respective one or more processors such as the processors or processor circuitry described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

### Further Extensions and Variations

With reference to **Figure 12****,** in accordance with an embodiment, a communication system includes a telecommunication network 3210 such as the wireless communications network 100, e.g. an loT network, or a WLAN, such as a 3GPP-type cellular network, which comprises an access network 3211, such as a radio access network, and a core network 3214. The access network 3211 comprises a plurality of base stations 3212a, 3212b, 3212c, such as the radio network node 110, 130, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the UE 120 such as a Non-AP STA 3291 located in coverage area 3213c is configured to wirelessly connect to, or be paged by, the corresponding base station 3212c. A second UE 3292 e.g. the wireless device 122 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 12 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

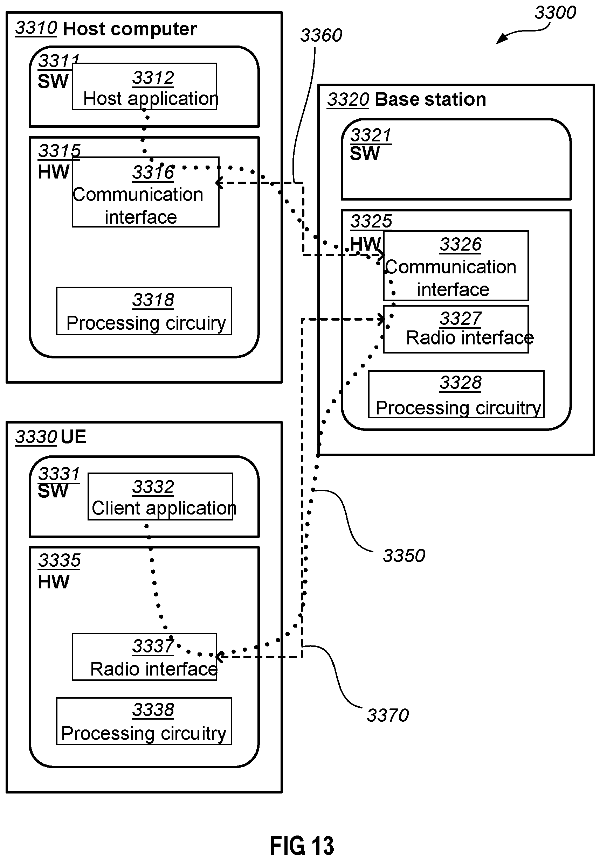

Example implementations, in accordance with an embodiment, of the UE, base station and host computer discussed in the preceding paragraphs will now be described with reference to **Figure 13****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown) served by the base station 3320. The communication interface 3326 may be configured to facilitate a connection 3360 to the host computer 3310. The connection 3360 may be direct or it may pass through a core network (not shown in Figure 13) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

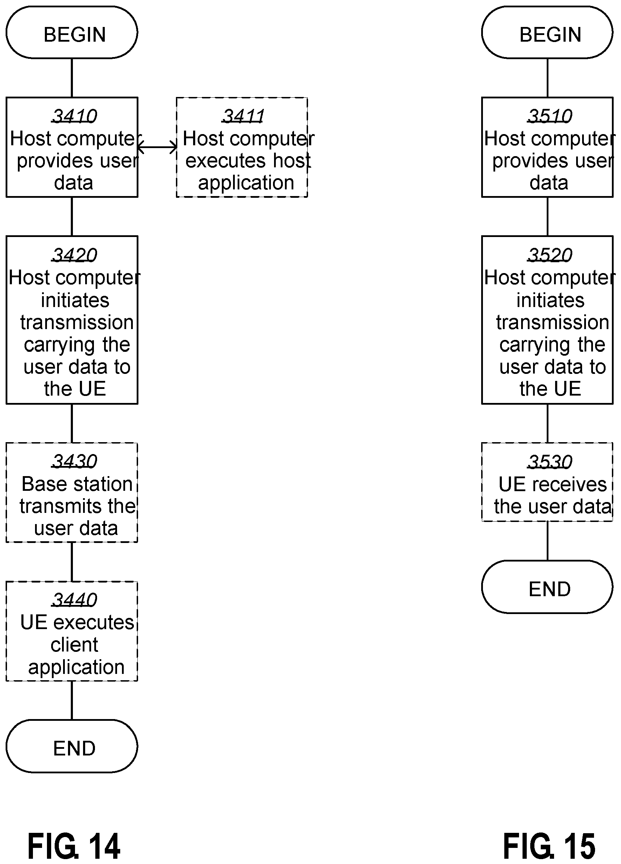

It is noted that the host computer 3310, base station 3320 and UE 3330 illustrated in Figure 13 may be identical to the host computer 3230, one of the base stations 3212a, 3212b, 3212c and one of the UEs 3291, 3292 of Figure 14, respectively. This is to say, the inner workings of these entities may be as shown in Figure 13 and independently, the surrounding network topology may be that of Figure 12.

In Figure 13, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the applicable **RAN** effect: data rate, latency, power consumption, and thereby provide benefits such as corresponding effect on the **OTT service:** e.g. reduced user waiting time, relaxed restriction on file size, better responsiveness, extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

**Figure 14** is a flowchart illustrating a method implemented in a communication system, in accordance with one embodiment. The communication system includes a host computer, a base station such as the radio network node 110, and a UE such as the UE 120, which may be those described with reference to Figure 12 and Figure 13. For simplicity of the present disclosure, only drawing references to Figure 14 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

**Figure 15** is a flowchart illustrating a method implemented in a communication system, in accordance with one embodiment. The communication system includes a host computer, a base station such as an AP STA, and a UE such as a Non-AP STA which may be those described with reference to Figure 12 and Figure 13. For simplicity of the present disclosure, only drawing references to Figure 15 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

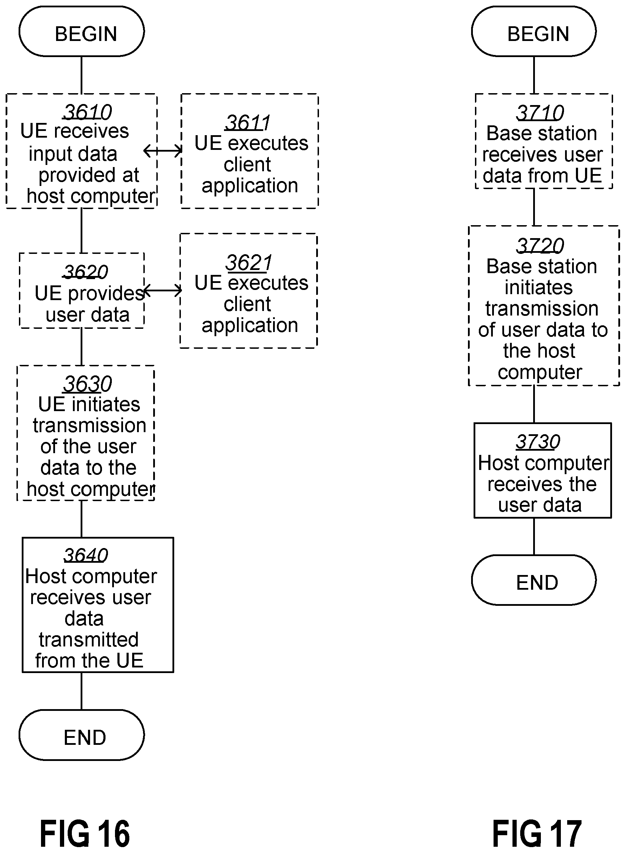

**Figure 16** is a flowchart illustrating a method implemented in a communication system, in accordance with one embodiment. The communication system includes a host computer, a base station such as an AP STA, and a UE such as a Non-AP STA which may be those described with reference to Figure 12 and Figure 13. For simplicity of the present disclosure, only drawing references to Figure 16 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

**Figure 17** is a flowchart illustrating a method implemented in a communication system, in accordance with one embodiment. The communication system includes a host computer, a base station such as an AP STA, and a UE such as a Non-AP STA which may be those described with reference to Figure 12 and Figure 13. For simplicity of the present disclosure, only drawing references to Figure 17 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

| **Abbreviation** | **Explanation** |
|---|---|
| LCS | Location Services |
| LMF | Location Management Function |
| AMF | Access Management Function |

## Claims

1. A method performed by a User Equipment, UE, (120), for handling positioning of the UE (120) in a wireless communications network (100), the UE (120) being capable of working in a number of positioning modes for performing measurements for positioning of the UE (120), the method is **characterised by**
*receiving* (503) from a radio network node (110) operating in the wireless communications network (100), a configuration to operate in a determined specific positioning mode out of the number of positioning modes, for a determined certain time duration,
*performing* (504) positioning of the UE (120) according to the configuration based on positioning assistance data from any one out of: the radio network node (110), and a core network node (130) operating in the wireless communications network (100).

2. The method according to claim 1, further comprising:
*sending* (501) towards the core network node (130), information about the number of positioning modes wherein the UE (120) is capable of performing measurements for positioning of the UE (120).

3. The method according to any of the claims 1-2, further comprising:
*sending* (502) towards the core network node (130), a request for positioning assistance data.

4. The method according to any of the claims 1-3, wherein:
the number of positioning modes comprises at least one or more out of: UE-Assisted positioning mode, and UE-Based positioning mode.

5. The method according to any of the claims 1-4, wherein the configuration is received in an New radio, NR, LTE Positioning Protocol, LPP, message.

6. A computer program comprising instructions, which when executed by a processor, causes the processor to perform actions according to any of the claims 1-5.

7. A carrier comprising the computer program of claim 6, wherein the carrier is one of an electronic signal, an optical signal, an electromagnetic signal, a magnetic signal, an electric signal, a radio signal, a microwave signal, or a computer-readable storage medium.

8. A method performed by a core network node (130), for handling positioning of a User Equipment, UE (120) in a wireless communications network (100), the method comprising:
*obtaining* (601) information that the UE (120) is capable of working in a number of positioning modes for performing measurements for positioning of the UE (120), the method is **characterised by**
*determining* (603) a specific positioning mode out of the number of positioning modes, for the UE (120) to operate in for a determined certain time duration, and
*sending* (604) to a radio network node (110) serving the UE (120), a grant to operate in the determined specific positioning mode during the determined certain time duration.

9. The method according to claim 8, further comprising:
*assisting* (605) the UE (120) in performing positioning of the UE (120) according to the sent grant, by sending positioning assistance data to the UE (120).

10. The method according to any of the claims 8-9, further comprising:
*receiving* (602) from the UE (120), a request for positioning assistance data.

11. The method according to any of the claims 8-10, wherein the number of positioning modes comprises at least one or more out of: UE-Assisted positioning mode, and UE-Based positioning mode.

12. A computer program comprising instructions, which when executed by a processor, causes the processor to perform actions according to any of the claims 8-11.

13. A carrier comprising the computer program of claim 12, wherein the carrier is one of an electronic signal, an optical signal, an electromagnetic signal, a magnetic signal, an electric signal, a radio signal, a microwave signal, or a computer-readable storage medium.

14. A method performed by a radio network node (110), for handling positioning of a User Equipment, UE (120) in a wireless communications network (100), the method is **characterised by**
*receiving* (703) from a core network node (130), a grant for the UE (120) to operate in a determined specific positioning mode out of the number of positioning modes, during a determined certain time duration, in which number of positioning modes the UE (120) is capable of working for performing measurements for positioning of the UE (120),
*determining* (704) a configuration to operate in a determined specific positioning mode during the determined certain time duration, based on the received grant, and
*sending* (705) to the UE (120), the determined configuration for performing positioning of the UE (120) according to the determined configuration.

15. The method according to claim 14, further comprising:
*assisting* (706) the UE (120) in performing positioning of the UE (120) according to the sent configuration, by sending positioning assistance data to the UE (120).

16. The method according to any of the claims 14-15, wherein the determined configuration is sent in a New Radio Positioning Protocol A, NRPPa, message.

17. The method according to any of the claims 14-16, wherein the number of positioning modes comprises at least one or more out of: UE-Assisted positioning mode, and UE-Based positioning mode.

18. A computer program comprising instructions, which when executed by a processor, causes the processor to perform actions according to any of the claims 14-17.

19. A carrier comprising the computer program of claim 18, wherein the carrier is one of an electronic signal, an optical signal, an electromagnetic signal, a magnetic signal, an electric signal, a radio signal, a microwave signal, or a computer-readable storage medium.

20. A User Equipment, UE, (120), for handling positioning of the UE (120) in a wireless communications network (100), the UE (120) being capable of working in a number of positioning modes for performing measurements for positioning of the UE (120), the UE (120) is **characterised by** being configured to:
*receive* from a radio network node (110) operable in the wireless communications network (100), a configuration to operate in a determined specific positioning mode out of the number of positioning modes, for a determined certain time duration,
*perform* positioning of the UE (120) according to the configuration based on positioning assistance data from any one out of: the radio network node (110) and a core network node (130) operable in the wireless communications network (100).

21. A core network node (130), for handling positioning of a User Equipment, UE (120) in a wireless communications network (100), the core network node (130) being configured to:
*obtain* information that the UE (120) is capable of working in a number of positioning modes for performing measurements for positioning of the UE (120), the core network node (130) is **characterised by** being configured to:
*determine* a specific positioning mode out of the number of positioning modes, for the UE (120) to operate in for a determined certain time duration, and
*send* to a radio network node (110) serving the UE (120), a grant to operate in the determined specific positioning mode during the determined certain time duration.

22. A radio network node (110), for handling positioning of a User Equipment, UE (120) in a wireless communications network (100), the radio network node (110) is **characterised by** being configured to:
*receive* from a core network node (130), a grant for the UE (120) to operate in a determined specific positioning mode out of the number of positioning modes, during a determined certain time duration, in which number of positioning modes the UE (120) is capable of working for performing measurements for positioning of the UE (120),
*determine* a configuration to operate in a determined specific positioning mode during the determined certain time duration, based on the received grant, and
*send* to the UE (120), a determined configuration for performing positioning of the UE (120) according to the determined configuration.

## Patentansprüche

1. Verfahren, das von einer Benutzereinrichtung, UE, (120) durchgeführt wird, zur Handhabung von Positionsbestimmung der UE (120) in einem Drahtloskommunikationsnetzwerk (100), wobei die UE (120) imstande ist, in einer Anzahl von Positionsbestimmungsmodi zum Durchführen von Messungen zur Positionsbestimmung der UE (120) zu arbeiten, wobei das Verfahren **gekennzeichnet ist durch**:
Empfangen (503) einer Konfiguration, um für eine bestimmte gewisse Zeitdauer in einem bestimmten spezifischen Positionsbestimmungsmodus aus der Anzahl von Positionsbestimmungsmodi zu arbeiten, von einem Funknetzwerkknoten (110), der im Drahtloskommunikationsnetzwerk (100) operiert,
Durchführen (504) von Positionsbestimmung der UE (120) gemäß der Konfiguration basierend auf Positionsbestimmungshilfsdaten von einem oder mehreren von: dem Funknetzwerkknoten (110) und einem Kernnetzwerkknoten (130), der im Drahtloskommunikationsnetzwerk (100) operiert.

2. Verfahren nach Anspruch 1, ferner umfassend:
Senden (501) von Informationen über die Anzahl von Positionsbestimmungsmodi, in welchen die UE (120) zum Durchführen von Messungen zur Positionsbestimmung der UE (120) imstande ist, an den Kernnetzwerkknoten (130) .

3. Verfahren nach einem der Ansprüche 1 bis 2, ferner umfassend:
Senden (502) einer Anforderung für Positionsbestimmungshilfsdaten an den Kernnetzwerkknoten (130).

4. Verfahren nach einem der Ansprüche 1 bis 3, wobei:
die Anzahl von Positionsbestimmungsmodi mindestens einen oder mehrere umfasst aus: einem UE-gestützten Positionsbestimmungsmodus und einem UE-basierten Positionsbestimmungsmodus.

5. Verfahren nach einem der Ansprüche 1 bis 4, wobei Konfiguration in einer Nachricht des New-Radio-,NR-,LTE-Positionsbestimmungsprotokolls, LPP, empfangen wird.

6. Computerprogramm, umfassend Anweisungen, die bei Ausführung durch einen Prozessor den Prozessor zum Durchführen von Vorgängen nach einem der Ansprüche 1 bis 5 veranlassen.

7. Datenträger, umfassend das Computerprogramm nach Anspruch 6, wobei der Datenträger eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

8. Verfahren, das von einem Kernnetzwerkknoten (130) durchgeführt wird, zur Handhabung von Positionsbestimmung einer Benutzereinrichtung, UE, (120) in einem Drahtloskommunikationsnetzwerk (100), wobei das Verfahren umfasst:
Erhalten (601) von Informationen, dass die UE (120) imstande ist, in einer Anzahl von Positionsbestimmungsmodi zum Durchführen von Messungen zur Positionsbestimmung der UE (120) zu arbeiten, wobei das Verfahren **gekennzeichnet ist durch**:
Bestimmen (603) eines spezifischen Positionsbestimmungsmodus aus der Anzahl von Positionsbestimmungsmodi, in dem die UE (120) für eine bestimmte gewisse Zeitdauer arbeiten soll, und
Senden (604) einer Genehmigung zum Arbeiten im bestimmten spezifischen Positionsbestimmungsmodus während der bestimmten gewissen Zeitdauer an einen Funknetzwerkknoten (110), der die UE (120) bedient.

9. Verfahren nach Anspruch 8, ferner umfassend:
Unterstützen (605) der UE (120) beim Durchführen der Positionsbestimmung der UE (120) gemäß der gesendeten Genehmigung durch Senden von Positionsbestimmungshilfsdaten an die UE (120).

10. Verfahren nach einem der Ansprüche 8 bis 9, ferner umfassend:
Empfangen (602) einer Anforderung für Positionsbestimmungshilfsdaten von der UE (120).

11. Verfahren nach der Ansprüche 8 bis 10, wobei die Anzahl von Positionsbestimmungsmodi mindestens einen oder mehrere umfasst aus: einem UE-gestützten Positionsbestimmungsmodus und einem UE-basierten Positionsbestimmungsmodus.

12. Computerprogramm, umfassend Anweisungen, die bei Ausführung durch einen Prozessor den Prozessor zum Durchführen von Vorgängen nach einem der Ansprüche 8 bis 11 veranlassen.

13. Datenträger, umfassend das Computerprogramm nach Anspruch 12, wobei der Datenträger eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

14. Verfahren, das von einem Funknetzwerkknoten (110) durchgeführt wird, zur Handhabung von Positionsbestimmung einer Benutzereinrichtung, UE, (120) in einem Drahtloskommunikationsnetzwerk (100), wobei das Verfahren **gekennzeichnet ist durch**:
Empfangen (703) von einem Kernnetzwerkknoten (130) einer Genehmigung für die UE (120) zum Arbeiten während einer bestimmten gewissen Zeitdauer in einem bestimmten spezifischen Positionsbestimmungsmodus aus der Anzahl von Positionsbestimmungsmodi, in welcher Anzahl von Positionsbestimmungsmodi die UE (120) zum Arbeiten zum Durchführen von Messungen zur Positionsbestimmung der UE (120) imstande ist,
Bestimmen (704) einer Konfiguration zum Arbeiten in einem bestimmten spezifischen Positionsbestimmungsmodus während der bestimmten gewissen Zeitdauer basierend auf der empfangenen Genehmigung, und
Senden (705) der bestimmten Konfiguration zum Durchführen von Positionsbestimmung der UE (120) gemäß der bestimmten Konfiguration an die UE (120).

15. Verfahren nach Anspruch 14, ferner umfassend:
Unterstützen (706) der UE (120) beim Durchführen der Positionsbestimmung der UE (120) gemäß der gesendeten Konfiguration durch Senden von Positionsbestimmungshilfsdaten an die UE (120).

16. Verfahren nach einem der Ansprüche 14 bis 15, wobei die bestimmte Konfiguration in einer Nachricht des New-Radio-Positionsbestimmungsprotokolls A, NRPPa, gesendet wird.

17. Verfahren nach der Ansprüche 14 bis 16, wobei die Anzahl von Positionsbestimmungsmodi mindestens einen oder mehrere umfasst aus: einem UE-gestützten Positionsbestimmungsmodus und einem UE-basierten Positionsbestimmungsmodus.

18. Computerprogramm, umfassend Anweisungen, die bei Ausführung durch einen Prozessor den Prozessor zum Durchführen von Vorgängen nach einem der Ansprüche 14 bis 17 veranlassen.

19. Datenträger, umfassend das Computerprogramm nach Anspruch 18, wobei der Datenträger eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

20. Benutzereinrichtung, UE, (120) zum Handhaben von Positionsbestimmung der UE (120) in einem Drahtloskommunikationsnetzwerk (100), wobei die UE (120) imstande ist, in einer Anzahl von Positionsbestimmungsmodi zum Durchführen von Messungen zur Positionsbestimmung der UE (120) zu arbeiten, wobei die UE (120) **dadurch gekennzeichnet ist, dass** sie konfiguriert ist zum:
Empfangen einer Konfiguration, um für eine bestimmte gewisse Zeitdauer in einem bestimmten spezifischen Positionsbestimmungsmodus aus der Anzahl von Positionsbestimmungsmodi zu arbeiten, von einem Funknetzwerkknoten (110), der im Drahtloskommunikationsnetzwerk (100) operiert,
Durchführen von Positionsbestimmung der UE (120) gemäß der Konfiguration basierend auf Positionsbestimmungshilfsdaten von einem oder mehreren von: dem Funknetzwerkknoten (110) und einem Kernnetzwerkknoten (130) im Drahtloskommunikationsnetzwerk (100) operiert.

21. Kernnetzwerkknoten (130) zum Handhaben von Positionsbestimmung einer drahtlosen Benutzereinrichtung, UE, (120) in einem Drahtloskommunikationsnetzwerk (100), wobei der Kernnetzwerkknoten (130) konfiguriert ist zum:
Erhalten von Informationen, dass die UE (120) imstande ist, in einer Anzahl von Positionsbestimmungsmodi zum Durchführen von Messungen zur Positionsbestimmung der UE (120) zu arbeiten, wobei der Kernnetzwerkknoten (130) **dadurch gekennzeichnet ist, dass** er konfiguriert ist zum:
Bestimmen eines spezifischen Positionsbestimmungsmodus aus der Anzahl von Positionsbestimmungsmodi, in dem die UE (120) für eine bestimmte gewisse Zeitdauer arbeiten soll, und
Senden einer Genehmigung zum Arbeiten im bestimmten spezifischen Positionsbestimmungsmodus während der bestimmten gewissen Zeitdauer an einen Funknetzwerkknoten (110), der die UE (120) bedient.

22. Funknetzwerkknoten (110) zum Handhaben von Positionsbestimmung einer drahtlosen Benutzereinrichtung, UE, (120) in einem Drahtloskommunikationsnetzwerk (100), wobei der Funknetzwerkknoten (110) konfiguriert ist zum:
Empfangen von einem Kernnetzwerkknoten (130) einer Genehmigung für die UE (120) zum Arbeiten während einer bestimmten gewissen Zeitdauer in einem bestimmten spezifischen Positionsbestimmungsmodus aus der Anzahl von Positionsbestimmungsmodi, in welcher Anzahl von Positionsbestimmungsmodi die UE (120) zum Arbeiten zum Durchführen von Messungen zur Positionsbestimmung der UE (120) imstande ist,
Bestimmen einer Konfiguration zum Arbeiten in einem bestimmten spezifischen Positionsbestimmungsmodus während der bestimmten gewissen Zeitdauer basierend auf der empfangenen Genehmigung, und
Senden einer bestimmten Konfiguration zum Durchführen von Positionsbestimmung der UE (120) gemäß einer bestimmten Konfiguration an die UE (120).

## Revendications

1. Procédé réalisé par un équipement utilisateur, UE, (120), pour prendre en charge un positionnement de l'UE (120) dans un réseau de communication sans fil (100), l'UE (120) étant capable de fonctionner dans un nombre de modes de positionnement pour réaliser des mesures pour le positionnement de l'UE (120), le procédé étant **caractérisé par**
la réception (503), depuis un noeud de réseau radio (110) fonctionnant dans le réseau de communication sans fil (100), d'une configuration pour fonctionner dans un mode de positionnement spécifique déterminé parmi le nombre de modes de positionnement, pendant une certaine durée déterminée,
la réalisation (504) du positionnement de l'UE (120) en fonction de la configuration sur la base de données d'assistance au positionnement provenant de l'un quelconque parmi : le noeud de réseau radio (110), et un noeud de réseau central (130) fonctionnant dans le réseau de communication sans fil (100).

2. Procédé selon la revendication 1, comprenant en outre :
l'envoi (501), vers le noeud de réseau central (130), d'informations relatives au nombre de modes de positionnement, dans lequel UE (120) est capable de réaliser des mesures pour le positionnement de l'UE (120) .

3. Procédé selon la revendication 1 ou 2, comprenant en outre :
l'envoi (502), vers le noeud de réseau central (130), d'une demande de données d'assistance au positionnement.

4. Procédé selon l'une quelconque des revendications 1 à 3, dans lequel :
le nombre de modes de positionnement comprend au moins l'un ou plusieurs parmi : un mode de positionnement assisté par UE, et un mode de positionnement basé sur UE.

5. Procédé selon l'une quelconque des revendications 1 à 4, dans lequel la configuration est reçue dans un message de protocole de positionnement LTE, LPP, nouvelle radio, NR.

6. Programme informatique comprenant des instructions qui, lorsqu'elles sont exécutées par un processeur, amènent le processeur à réaliser des actions selon l'une quelconque des revendications 1 à 5.

7. Support comprenant le programme informatique selon la revendication 6, dans lequel le support est l'un parmi un signal électronique, un signal optique, un signal électromagnétique, un signal magnétique, un signal électrique, un signal radio, un signal micro-ondes et un support de stockage lisible par ordinateur.

8. Procédé réalisé par un noeud de réseau central (130), pour prendre en charge un positionnement d'un équipement utilisateur, UE, (120) dans un réseau de communication sans fil (100), le procédé comprenant :
l'obtention (601) d'informations que l'UE (120) est capable de fonctionner dans un nombre de modes de positionnement pour réaliser des mesures pour le positionnement de l'UE (120), le procédé étant **caractérisé par**
la détermination (603) d'un mode de positionnement spécifique parmi le nombre de modes de positionnement, pour que l'UE (120) fonctionne dans celui-ci pendant une certaine durée déterminée, et
l'envoi (604), à un noeud de réseau radio (110) desservant l'UE (120), d'un octroi pour fonctionner dans le mode de positionnement spécifique déterminé pendant la certaine durée déterminée.

9. Procédé selon la revendication 8, comprenant en outre : l'assistance (605) à l'UE (120) pour réaliser le positionnement de l'UE (120) en fonction de l'octroi envoyé, par l'envoi de données d'assistance au positionnement à l'UE (120).

10. Procédé selon la revendication 8 ou 9, comprenant en outre :
la réception (602), depuis l'UE (120), d'une demande de données d'assistance au positionnement.

11. Procédé selon l'une quelconque des revendications 8 à 10, dans lequel le nombre de modes de positionnement comprend au moins l'un ou plusieurs parmi : un mode de positionnement assisté par UE, et un mode de positionnement basé sur UE.

12. Programme informatique comprenant des instructions qui, lorsqu'elles sont exécutées par un processeur, amènent le processeur à réaliser des actions selon l'une quelconque des revendications 8 à 11.

13. Support comprenant le programme informatique selon la revendication 12, dans lequel le support est l'un parmi un signal électronique, un signal optique, un signal électromagnétique, un signal magnétique, un signal électrique, un signal radio, un signal micro-ondes et un support de stockage lisible par ordinateur.

14. Procédé réalisé par un noeud de réseau radio (110), pour prendre en charge un positionnement d'un équipement utilisateur, UE, (120) dans un réseau de communication sans fil (100), le procédé étant **caractérisé par** :
la réception (703), depuis un noeud de réseau central (130), d'un octroi permettant à l'UE (120) de fonctionner dans un mode de positionnement spécifique déterminé parmi le nombre de modes de positionnement, pendant une certaine durée déterminée, l'UE (120) étant capable de fonctionner dans ledit nombre de modes de positionnement pour réaliser des mesures pour le positionnement de l'UE (120),
la détermination (704) d'une configuration pour fonctionner dans un mode de positionnement spécifique déterminé pendant la certaine durée déterminée, sur la base de l'octroi reçu, et
l'envoi (705), à l'UE (120), de la configuration déterminée pour réaliser le positionnement de l'UE (120) en fonction de la configuration déterminée.

15. Procédé selon la revendication 14, comprenant en outre :
l'assistance (706) à l'UE (120) pour réaliser le positionnement de l'UE (120) en fonction de la configuration envoyée, par l'envoi de données d'assistance au positionnement à l'UE (120).

16. Procédé selon la revendication 14 ou 15, dans lequel la configuration déterminée est envoyée dans un message de protocole de positionnement nouvelle radio A, NRPPa.

17. Procédé selon l'une quelconque des revendications 14 à 16, dans lequel le nombre de modes de positionnement comprend au moins l'un ou plusieurs parmi : un mode de positionnement assisté par UE, et un mode de positionnement basé sur UE.

18. Programme informatique comprenant des instructions qui, lorsqu'elles sont exécutées par un processeur, amènent le processeur à réaliser des actions selon l'une quelconque des revendications 14 à 17.

19. Support comprenant le programme informatique selon la revendication 18, dans lequel le support est l'un parmi un signal électronique, un signal optique, un signal électromagnétique, un signal magnétique, un signal électrique, un signal radio, un signal micro-ondes et un support de stockage lisible par ordinateur.

20. Equipement utilisateur, UE, (120), pour prendre en charge un positionnement de l'UE (120) dans un réseau de communication sans fil (100), l'UE (120) étant capable de fonctionner dans un nombre de modes de positionnement pour réaliser des mesures pour le positionnement de l'UE (120), l'UE (120) étant **caractérisé en ce qu'**il est configuré pour :
recevoir, depuis un noeud de réseau radio (110) pouvant fonctionner dans le réseau de communication sans fil (100), une configuration pour fonctionner dans un mode de positionnement spécifique déterminé parmi le nombre de modes de positionnement, pendant une certaine durée déterminée,
réaliser le positionnement de l'UE (120) en fonction de la configuration sur la base de données d'assistance au positionnement provenant de l'un quelconque parmi : le noeud de réseau radio (110), et un noeud de réseau central (130) pouvant fonctionner dans le réseau de communication sans fil (100).

21. Noeud de réseau central (130), pour prendre en charge un positionnement d'un équipement utilisateur, UE, (120) dans un réseau de communication sans fil (100), le noeud de réseau central (130) étant configuré pour :
obtenir des informations que l'UE (120) est capable de fonctionner dans un nombre de modes de positionnement pour réaliser des mesures pour le positionnement de l'UE (120), le noeud de réseau central (130) étant **caractérisé en ce qu'**il est configuré pour :
déterminer un mode de positionnement spécifique parmi le nombre de modes de positionnement, pour que l'UE (120) fonctionne dans celui-ci pendant une certaine durée déterminée, et
envoyer, à un noeud de réseau radio (110) desservant l'UE (120), un octroi pour fonctionner dans le mode de positionnement spécifique déterminé pendant la certaine durée déterminée.

22. Noeud de réseau radio (110), pour prendre en charge un positionnement d'un équipement utilisateur, UE, (120) dans un réseau de communication sans fil (100), le noeud de réseau radio (110) étant **caractérisé en ce qu'**il est configuré pour :
recevoir, depuis un noeud de réseau central (130), un octroi permettant à l'UE (120) de fonctionner dans un mode de positionnement spécifique déterminé parmi le nombre de modes de positionnement, pendant une certaine durée déterminée, l'UE (120) étant capable de fonctionner dans ledit nombre de modes de positionnement pour réaliser des mesures pour le positionnement de l'UE (120),
déterminer une configuration pour fonctionner dans un mode de positionnement spécifique déterminé pendant la certaine durée déterminée, sur la base de l'octroi reçu, et
envoyer, à l'UE (120), une configuration déterminée pour réaliser le positionnement de l'UE (120) en fonction de la configuration déterminée.
